# EUROPÄISCHE PATENTSCHRIFT

(11) **EP 2 444 545 B1**
(45) Veröffentlichungstag und Bekanntmachung des Hinweises auf die Patenterteilung: **12.03.2014**
(21) Anmeldenummer: 12151766.8
(22) Anmeldetag: 15.04.2008
(51) Int. Cl.: D06M 11/45, D06M 11/46, D06M 11/79, D06M 13/513, D06M 15/256, D06M 23/08, D06M 23/12, B01J 13/04, C09K 3/18, D06M 11/83, C09C 1/40, C09C 3/00, C09C 3/04, C09C 3/12, B82Y 30/00, B01J 13/14, C09C 1/62, C09C 3/10, C09C 1/30

(54) **Wasser, Öl und Schmutz abweisende Ausrüstungen auf Fasern und textilen Flächengebilden**
Water, oil and dirt repellent finishing on fibres and textile area-measured material
Equipements repoussant l'eau, l'huile et la saleté sur des fibres et des structures plates textiles

(30) Priorität: 17.04.2007 CH 627072007; 27.03.2008 CH 454082008
(43) Veröffentlichungstag der Anmeldung: 25.04.2012
(62) Teilanmeldung aus: 08733793.7
(73) Patentinhaber: HeiQ Materials AG, 5330 Bad Zurzach (CH)
(72) Erfinder: Angehrn, Stefan, 9631 Ulisbach (CH); Marte, Oliver, 9630 Wattwil (CH); Meyer, Martin, 8800 Thalwil (CH); Bienz, Anita, 9606 Bütschwil (CH)
(74) Vertreter: Bremi, Tobias Hans

(56) Entgegenhaltungen:
- EP-A1- 1 674 609
- EP-B1- 1 268 919
- DE-A1- 10 233 829
- DE-A1-102005 039 436
- US-A1- 2006 286 378

## Beschreibung

### TECHNISCHES GEBIET

Die Erfindung betrifft ein Verfahren unter Verwendung eines Partikel-Komposits zur Ausrüstung von Fasern und textilen Flächengebilden gemäss Patentanspruch 1.

### STAND DER TECHNIK

Wasser, Öl und Schmutz abweisende Ausrüstungen auf Textilien werden bereits seit vielen Jahren hergestellt, wobei die Ansprüche an die Effektniveaus mit der Einführung der Begriffe Nanotechnologie und Lotus-Effekt (W. Barthlott et al., Der Lotus-Effekt: Selbstreinigende Oberflächen nach dem Vorbild Natur, ITB International Textile Bulletin 1/2001 , S. 8-12; E. Gärtner, Nano-Finish ersetzt herkömmliche Imprägnierung, Chemische Rundschau 8 (2001), 12. April) sprunghaft angestiegen sind. Der von W. Barthlott erstmals publizierte Lotus-Effekt entspricht einem bei Blüten und Blättern anzutreffenden Selbstreinigungseffekt durch eine aus Wachskristallen gebildete Mikrorauhigkeit auf Blüten- bzw. Blattoberflächen.

So ist der Stellenwert der chemisch nicht fixierbaren Hydrophobierungschemikalien auf das Niveau der Bedeutungslosigkeit abgesunken und das der chemisch fixierbaren, insbesondere der Fluorkarbonharze, enorm angestiegen. Aufgrund der hohen, vom Markt geforderten Effektansprüche sind es ausnahmslos Fluorkarbonharze, die diesen Ansprüchen genügen. Zu diesen zählen hohe Beregnungsnoten (Beregnungsprüfung nach Bundesmann, DIN 53888), hohe Ölnoten und eine sehr gute Schmutzabweisung, wobei sämtliche Kriterien selbst nach vielfach durchgeführten Wäschen oder chemischen Reinigungsoperationen erfüllt sein sollten. Allen heute auf dem Markt befindlichen Hydrophobierungsmitteln gemeinsam ist, dass sie ausnahmslos als wässrige Emulsionen in den Handel gelangen, und nach deren Applikation auf das Textilgut, diesem einen mehr oder weniger ausgeprägten hydrophoben oder Schmutz abweisen- den Charakter verleihen. Die Bedingungen der chemischen Reinigungsbeständigkeit und Ölabweisung werden nur von den Fluorkarbonharzen erfüllt.

Die Verwendung von Fluorkarbonharzen als Ausrüstungschemikalien für Textilien gehört heute zum Stand der Technik. Die damit standardmässig erzielten Effekte sind im Vergleich mit nicht fluorierten Hydrophobierungschemikalien sehr gut, jedoch sind die in jüngster Zeit geforderten Effektniveaus durch die alleinige Verwendung von Fluorkarbonharzen nicht zu erfüllen. Mit dem bekannt werden des Lotus-Effektes (H. G. Edelmann et al., Ultrastructure and chemistry of the cell wall of the moss Rhacocarpus purpurascens: a puzzling architecture among plants, Planta 206 (1998) S. 315-321 ; W. Barthlott, Self-cleaning surfaces of objects and process for producing same, WO/1996/004123) wurden Entwicklungen eingeleitet, die zu einem sprunghaften Anstieg der Effektniveaus führten. Es sind dies nanotechnologische Lösungsansätze, die zu Lotus strukturierten Oberflächen führen, welche vornehmlich die Öl- und Schmutzabweisung erheblich steigern (W. Barthlott, C. Neinhuis, Nur was rau ist, wird von selber sauber, Technische Rundschau Nr. 10 (1999), S. 56-57). Eine diesbezügliche "Schlüsseltechnologie" für die Textilindustrie stellt das in der Patentschrift EP 1 ,268,919 beschriebene Verfahren dar, welches auf der Selbstorganisation von methylierten oder fluorierten Nanopartikeln aufbaut, durch die während der Trocknungsphase, der auf das Textilgut applizierten Schicht, Lotus-Strukturen entstehen. Die nach diesem Verfahren hergestellten Hydrophobierungsschichten zeigen mit Heptan gemessene Kontaktwinkel von 70 - 90 ° im Vergleich mit nur aus Fluorkarbonharz bestehenden Schichten, die einen Kontaktwinkel von 40 - 60 ° aufweisen. Die Kontaktwinkelbestimmung erfolgt nach einem zur Charakterisierung von Lotus-Strukturen entwickelten Messverfahren: O. Marte, M. Hochstrasser, Charakterisierung von "Lotusstrukturierten Faser- und Gewebeoberflächen, Melliand Textilberichte 10/2005, S. 746-750.

Der Nachteil der ausschliesslich mit Fluorkarbon harz ausgerüsteten Gewebe liegt im Vergleich mit Lotus-Strukturen aufweisenden Schichten in deren niedrigeren Öl- und Schmutzabweisung.

Der Nachteil heutiger Lotus-Strukturen tragender Ausrüstungen liegt in deren Formulierungen, die zur Einarbeitung methylierter und/oder fluorierter Partikel erhebliche Mengen geeigneter Dispergatoren erfordern (Patentschrift EP 1 ,268,919), die ausnahmslos das Effektniveau der Funktionsschichten absenken. Ein weiterer Nachteil besteht in der nicht einfach zu realisierenden Einhaltung der verfahrenstechnischen Bedingungen, die zur Selbstorganisation (gezielte Agglomeration) der Nanopartikel bzw. zu den erwünschten Lotus-Strukturen führen (O. Marte, U. Meyer, Neue Testverfahren zur Bewertung hydrophober und superhydrophober Ausrüstungen, Melliand Textilberichte 10/2006, S. 732-735). Dies ist auch der Grund weshalb hydrophobe Multifunktionsschichten bis heute keinen industriellen Eingang gefunden haben. Besonders erwähnenswert sind die antistatische und bakterizide Funktion.

Ein weiterer sehr wesentlicher Nachteil sind die hohen Kosten, entsprechend modifizierter Nanopartikel und die bei deren Verarbeitung notwendigen Sicherheitsvorkehrungen, die eine Minimierung des Nanopartikelanteils in den Formulierungen erforderlich machen. Die EP 1 674 609, und ganz ähnlich auch die DE 102 33 829, beschreibt ein Verfahren zur Erhöhung der Wasserdichtigkeit von porösen textilen Flächengebilden. Dabei werden auf die textilen Flächengebilde hydrophobe Partikel oder nicht hydrophobe Partikel, die in einem anschliessenden Verfahrensschritt hydrophobiert werden, mit einer mittleren Partikelgrösse von 0,02 bis 100 m trocken aufgebracht, welche an den Fasern der textilen Flächengebilde fixiert werden und so die Oberflächen der Fasern mit einer Struktur aus Erhebungen und/oder Vertiefungen ausgerüstet werden, wobei die Erhebungen einen Abstand von 20 nm bis 100 m und eine Höhe von 20 nm bis 100 m aufweisen.

Die US 2006/286378 beschreibt anorganische Partikel, die mit einer Schicht aus polymeren umhüllt sind, als Toner oder für andere Anwendungen ausserhalb des Textilbereichs.

### DARSTELLUNG DER ERFINDUNG

Es ist die Aufgabe der Erfindung ein Verfahren zur Erzeugung einer nicht-nanotechnologisch, lotus-strukturierten Ausrüstungsschicht insbesondere zur Hydro- und Oleophobierung und zur Schmutzabweisung anzugeben, die mindestens so gute bzw. bessere Ausrüstungseffekte im Vergleich mit einem nanotechnologischen Lösungsansatz ergibt.

Eine weitere Aufgabe besteht in der zur Verfügungstellung einer Formulierungstechnik, die den Einsatz verschiedener Partikelkomposite mit unterschiedlichen Funktionen zulässt. Beispielsweise sei die hydrophobe und bakterizide Funktion erwähnt, vereinigt in der gleichen Ausrüstungsschicht.

Eine weitere Aufgabe der Erfindung ist es, dem Textilveredler ein Mikropartikel-Komposit zur Verfügung zu stellen, welches es ihm erlaubt, ein von ihm frei vorgegebenes Hydrophobierungsmittel, insbesondere ein Fluorkarbonharz mit dem Partikel-Komposit zu kombinieren und die Formulierung standardmässig auf das Gewebe zu applizieren, trocknen und zu fixieren. Für die Trocknungs- und Fixierbedingungen sind nur und ausschliesslich die Einhaltung der vom Reaktionssystem vorgegebenen Bedingungen gefordert. Dies unterscheidet sich zu bestehenden, nach nanotechnologischen Prinzipien arbeitenden Verfahren, die zur Ausbildung von Lotusstrukturen spezielle Formulierungs-und Verfahrensbedingungen benötigen.

Die Lösung der Aufgabe wird durch die Merkmale von Anspruch 1 erreicht, insbesondere durch den Einsatz eines Partikel-Komposits im Verfahren, welches sowohl gleichartige (bezüglich Form und chemischer Zusammensetzung) als auch nicht-gleichartige (bezüglich Form und chemischer Zusammensetzung) und vorwiegend hydrophob getränkte und/oder beschichtete, unterschiedlich grosse Mikro- und allenfalls Nanopartikel (0.01 - 10 µm) enthält. Durch diese Kombination von getränkten und/oder beschichteten, unterschiedlich grossen Mikro- und allenfalls Nanopartikeln resultieren Hyperstrukturen, die zu einer Verbesserung des Öl und Schmutz abweisenden Effektes führen. Die unterschiedlichen Grossen werden beispielsweise durch unterschiedlich geführte Mahlprozesse hergestellt und führen in der Mischung in der Regel zu einer bi- oder multimodalen Partikelgrössenverteilung im Partikel-Komposit. Dadurch wird die Basis zur Ausbildung dem Phänotypus ähnlicher Strukturen auf Textiloberflächen vorgegeben. Durch unterschiedlich geführte Dispergier- und/oder Mahlprozesse resultieren Partikelgrössen, die sich bis zu zwei Zehnerpotenzen unterscheiden. Überdies resultiert durch die Anwesenheit beschichteter, nicht gezielt agglomerierter Mikropartikel eine Verbesserung der Scheuerfestigkeit, in deren Folge auch die Waschbeständigkeit des Repellent-Effektes (Abstossungseffektes) erhöht wird.

Der Begriff 'nicht-nanotechnologisch' hergestellte Ausrüstungsschicht ist deshalb von Wichtigkeit, da es sich bei der Herstellung dieser Schicht, bzw. des zur Schichtbildung verwendeten Partikel-Komposits um eine Top-down-Technologie und nicht um eine Bottom-up-Technologie handelt (Der Brockhaus Naturwissenschaft und Technik, Bd. 2, S. 1376-1377, Spektrum Akademischer Verlag GmbH Heidelberg (2003)). Im Folgenden steht der Begriff Hydrophobierungsmittel' stellvertretend für oleophobierende und schmutzabweisende Chemikalien.

Ein zweiter erfindungsgemässer Lösungsansatz besteht in der Partikel-Tränkung, im Partikelcoating bzw. in der Beschichtungstechnik der Partikel. Durch den Einsatz von reaktiven Polymeren als Tränkungs- und/oder Coatingmasse ist es möglich, den Partikeloberflächen dieselben physikalischen und chemischen Eigenschaften zu geben, wie sie in der Hostmatrix der Ausrüstungsschicht vorherrschend sind (z.B. ein und dasselbe Fluorkarbonharz). Dadurch werden vorzeitige Phasenseparationen in der Ausrüstungsflotte aber auch auf dem Textilsubstrat vermieden. Diese sind der Grund für einen anisotropen Schichtaufbau, der wiederum zu massiven Effekteinbussen führt (O. Marte, U. Meyer, Neue Testverfahren zur Bewertung hydrophober und superhydrophober Ausrüstungen, Melliand Textilberichte 10/2006, S. 732-735). Ein derartiger Partikelüberzug besteht vorzugsweise aus mehreren, übereinander liegenden Schichten von unterschiedlichen Polymeren mit unterschiedlichen Funktionalitäten. Der Schichtaufbau ist so zu wählen, dass die die Partikelporen füllende Schicht die grösste Affinität zur inneren Partikeloberfläche besitzt und die oberste, die Partikel umhüllende Schicht die der Hostmatrix ähnlichsten Eigenschaften zeigt. Die oberste Schicht wird in der Regel durch das Hydrophobierungspolymer gebildet, welches auch in der Ausrüstungsschicht die Hostmatrix darstellt. Bei sämtlichen, in der Tränkungs- bzw. Coatingmasse befindlichen Polymeren handelt es sich um Reaktivgruppen tragende Verbindungen, die im Verlaufe des Ausrüstungsprozesses waschfest vernetzt werden.

Ein weiterer Lösungsansatz zur Erzeugung von Hyperstrukturen auf der Oberfläche der Mikropartikel, bzw. der Ausrüstungsschicht ist die Einlagerung von Substanzen, die in Folge eines Phasenwechsels und/oder einer thermischen Zersetzung gasförmige Produkte bilden. Beispielsweise der Einsatz eines über 100°C siedenden, vorwiegend apolaren, aprotischen Lösungsmittels in das Partikelcoating, welches beim Austritt aus den Mikropartikeln während der Trocknung nanoskalige Strukturen hinterlässt. Eine analoge Wirkung wird durch den Einsatz Stickstoff, CO₂ oder Ammoniak abspaltender Verbindungen (z.B. Radikalstarter, Hydrogenkarbonate oder Ammoniumsalze) erreicht, die anstelle des Lösungsmittels eingesetzt werden.

Ein weiterer Lösungsansatz der Erfindung ist es, ausgehend von kostengünstigen, nicht chemisch modifizierten Polykieselsäuren (1-50 µm), diese Emulgator frei zu beschichten. Damit sind sie einerseits vom Textilausrüster problemlos zu verarbeiten und andererseits mit der hydrophoben Hostmatrix chemisch zu vernetzen. Unberücksichtigt hierbei sind allfällige in Fluorkarbonharzen enthaltene Tenside.

Ein besonderes Merkmal der Erfindung ist die Herstellung eines emulgatorfreien Partikel-Komposits als wesentlicher Faktor zur Verbesserung der diesbezüglichen Effekte. Dispergatoren und Emulgatoren als amphiphile Substanzen lagern sich in die hydrophob auszubildende Grenzschicht ein und sorbieren bzw. transportieren so, vom Ausrüstungssinn entfremdet, die prinzipgemäss abzuweisenden Substanzen, in das Textilgut. Ein weiterer Vorteil der Emulgator freien Formulierung ist der geringe LAD-Effekt ('Laundry/Air Dry', M. Rasch, et al., Melliand Textilberichte 6/2005, S. 456-459), der eine Folge der Wassersorption durch die Hydrophobierungsschicht ist. Durch die Anwesenheit von amphiphilen Substanzen in der Ausrüstungsschicht wird das Wasser aufgrund seines Dipolcharakters und der Ausbildung von Wasserstoffbrücken physikalisch/chemisch gebunden. Dadurch bedarf es erhöhten Temperaturen, um das Wasser wieder zu desorbieren und so den Hydrophobierungseffekt wieder zu regenerieren. Erfindungsgemäss wird den heute bekannten, einfachen Lotus-Strukturen eine dem Phänotypus ähnlichere Struktur gegeben (Erzeugung einer Hyperstruktur, W. Barthlott et al., Der Lotus-Effekt: Selbstreinigende Oberflächen nach dem Vorbild Natur, ITB International Textile Bulletin 1/2001 , S. 8-12), um damit bezüglich der Öl- und Schmutzabweisung eine weitere Effektsteigerung im Vergleich mit bekannten erzielbaren Lotus strukturierten Beschichtungen zu erzielen.

Die Herstellung des Partikel-Komposits kann sowohl als ein einstufiger als auch als mehrstufiger Coatingprozess durchgeführt werden.

Der einstufige Coatingprozess beinhaltet die Adsorption eines Polymers, bzw. von Polymeren aus einer vorwiegend wässrigen Phase. In diesem Fall sollten die Polymere mit der Partikeloberfläche eine chemische Bindung eingehen, um hohe Waschpermanenzen zu erzielen. Dies bedingt, dass die Partikel im selben Prozessschritt mit Hydroxyl- oder Amino-terminierten Silylverbindungen modifiziert werden. Ein allfälliger Zusatz von Vernetzungschemikalien, wie z.B. Isocyanate oder α-Aminoalkylierungs-produkte, ist abhängig von den Reaktionsmöglichkeiten der eingesetzten Polymeren.

Im Rahmen eines zweistufigen Coatingprozesses werden die Partikel in einem ersten Schritt mit einer Lösung eines Amino- und/oder Hydroxylgruppen haltigen, vorzugsweise eines verzweigten in Wasser unlöslichen Polymers in gelöster Form auf der Partikeloberfläche getränkt. Das Polymer ist in der Regel in einem polaren, protischen und/oder in einem unpolaren, nicht protischen Lösungsmittel löslich. In dieser Beschichtungslösung können auch allfällige Hyperstrukturen ausbildende Ingredienzien enthalten sein wie z.B. spezielle Lösungsmittel und/oder N₂, CO₂ oder NH₃ abspaltende Substanzen. Dieser Polymerlösung wird zusätzlich ein Vernetzersystem zugesetzt. Erst bei Temperaturen über 80 °C führt dies zur Vernetzung des Polymers, bzw. zur Vernetzung des im und auf der Partikeloberfläche sorbierten Polymers mit dem die Hostmatrix bildenden Hydrophobierungsmittel.

Der zweite Schritt dient zur Herstellung einer zweiten Coatingschicht. Er besteht in der Adsorption des Hydrophobierungsmittels, vorzugsweise eines Fluorkarbonharzes, aus wässriger Emulsion. Erfindungsgemäss können auch hier allfällige Hyperstrukturen ausbildende Ingredienzien zugesetzt werden.

Der dreistufige Coatingprozess besteht in der ersten Stufe aus einer chemischen Partikelmodifikation mit Amino- und/oder Hydroxyl- oder Glycidylgruppen terminierten Silylverbindungen, die der späteren Vernetzung mit der zweiten Coatingschicht dienen. Die zweite und dritte Coatingschicht zeigt einen analogen Aufbau wie er zuvor beschrieben wurde.

Die Partikelbenetzung mit den Ingredienzien der ersten Coatingschicht erfolgt vorteilhafterweise mit Rühraggregaten, während die weiteren Schritte in Mahlaggregaten durchgeführt werden. Bei den nach der Partikelbenetzung erfolgenden Mahloperationen (einstufig oder mehrstufig), werden die Mikropartikel von einer ursprünglichen Grosse von 1 - 50 µm auf die gewünschte Grosse verkleinert. Diese liegt im Bereich von 0.01 -2 µm vorzugsweise im Bereich von 0.3 - 0.9 µm, wobei vorzugsweise eine bimodale Partikelgrössenverteilung eingestellt wird, z.B. 0.4 und 0.8 µm. Das auf diese Weise hergestellte Partikel-Komposit besitzt eine Partikelkonzentration von 5 - 20 %, vorzugsweise von 10 - 12 % und zeigt aufgrund des Partikelcoatings und der erhöhten Viskosität praktisch keine Sedimentationsneigung. Dies trotz der Abwesenheit von Dispergatoren, womit der sonst übliche, den Hydrophobierungseffekt störende Einfluss eliminiert ist.

Die zur Herstellung des Partikel-Komposits verwendeten Partikel sind bevorzugt polymere Kieselsäuren, die in speziellen Verfahrensschritten, z.B. durch sequentiell durchgeführte Mahlprozesse, auf die gewünschte Grosse verkleinert werden. Dabei kann das gemahlene Produkt eine multimodale Partikelgrössenverteilung aufweisen. Neben den polymeren Kieselsäuren kommen auch Metalloxide wie z.B. Al₂O₃ oder Zirkoniumoxide bzw. Mischoxide zur Anwendung. Zur Erzielung einer bakteriziden oder fungiziden Funktion können beispielsweise die Siliziumdioxidpartikel mit elementarem Silber oder Kupfer und/oder deren Oxide beladen werden oder die entsprechenden Metallionen komplexiert enthalten.

Als weitere Möglichkeit eine multimodale Partikelgrössenverteilung zu erzielen, ist das Mischen von beispielsweise nach dem Flammverfahren (Hochtemperaturhydrolyse von Chlorsilanen) hergestellten Nanopartikeln mit einer Primärteilchengrösse von 10 - 30 nm. Dies in Kombination mit Partikeln, die im Top-down-Verfahren beispielsweise mittels eines Mahlprozesses auf die Grosse von 500 - 700 nm eingestellt werden.

Zur Partikelmodifikation werden Amino-, Hydroxyl-, Thiol- oder Glycidylgruppen tragende Silylverbindungen eingesetzt. Bevorzugt eingesetzte Verbindungen sind: N-2-Aminoethyl-3-Aminopropyltrimethoxysilan, 3-Aminopropylmethyltriethoxysilan, Bis(3-Trimethoxysilylpropyl)amin, Triamino funktionelles Propyltrimethoxysilan, Polyetherpropyltrimethoxysilane, 3-Mercaptopropyltrimethoxysilan und 3-Glycidyloxypropyltrimethoxysilan. Die Einsatzmengen der erwähnten Silylverbindungen betragen 0.2 -10%, bevorzugt 0.8 - 5% bezogen auf die Partikelmasse.

Als Hydroxyl- oder Aminogruppen haltige Polymere werden z.B. derivatisierte Polyacrylate, Polyester und Polyurethane eingesetzt, deren Löslichkeit in Wasser kleiner 10 % vorzugsweise kleiner 1 % ist. Solche Produkte finden bis heute in der Textilindustrie kaum eine Anwendung. Die Einsatzmengen für die erwähnten Polymere betragen 1 - 40 %, bevorzugt 10 - 30 % bezogen auf die Partikelmasse.

Bei den Hydrophobierungschemikalien handelt es sich sowohl um fettmodifizierte Melaminderivate, Polyacrylate und Polyurethane mit einer Fettkohlenwasserstoffkette von C₃ - C₂₄, bevorzugt von C₁₆ - C₂₀ als auch um perfluorierte Fettkohlenwasserstoffharze mit einer perfluorierten Fettkohlenwasserstoffkette von C₂ - C₁₂, bevorzugt C₄ - C₈, und Silikonharze. Die Einsatzmengen dieser Produktemulsionen zur Ausbildung einer Coatingschicht um die Partikel hängen von deren Trockensubstanzgehalt ab, der im Bereich von 10 - 30 % liegt. Die Trockensubstanz bezogenen Einsatzmengen solcher Produkte liegen bei 10 - 100 %, bevorzugt 20 - 50 % bezogen auf die Partikelmasse. Typische für diesen Zweck geeignete Handelsprodukte sind: Softgard M3 (soft chemicals, Italien), Oleophobol 7752 (Huntsman, Deutschland), Ruco-Gard AIR und Ruco-Dry DHY (Rudolf Chemie, Deutschland).

Als Vernetzer zur chemischen Fixierung, der für das Partikelcoating eingesetzten Polymeren, werden vorwiegend Polyisocyanate und α-Aminoalkylierungsprodukte eingesetzt. Bei Carboxylgruppen tragenden Coatingpolymeren werden als Vernetzer multifunktionelle Aziridine eingesetzt.

Unter den Isocyanaten sind es vor allem die mehrfach funktionellen Isocyanate die zur Anwendung gelangen (R-(N=C=O)ₙ; n = 2 bis 4). Beispiele typischer Vernetzer sind: 1 ,6-Diisocyanatohexan (Bayer MaterialScience, Deutschland), 3-Isocyanatomethyl-3,5,5-trimethylcyclohexylisocyanat (Hüls, Deutschland) oder Uretdion des 2,4-Diisocyanatotoluols (Bayer MaterialScience, Deutschland).

Der Einsatz der α-Aminoalkylierungsprodukte konzentriert sich heute vor allem auf Ethylenharnstoff- und Melaminderivate, die sowohl als Methylol als auch als veretherte Produkte im Handel sind. Beispiele sind Knittex FEL und Lyofix CHN (Huntsman, Deutschland).

Die Aziridine unterteilen sich in aliphatische und aromatische, die beide Verwendung finden. Typische Vertreter aliphatischer Propyleniminderivate sind: 1 ,1 '-Azelaoyl -bis - (2-methylaziridin) und N,N',N",N"'-Tetrapropylen-1 ,2,3,4-butantetracarbonsäureamid. Typische Vertreter aromatischer Propyleniminderivate sind: Toluol-2,6-dipropylenharnstoff (TPH) oder Diphenylmethan-bis-4,4'-N,N'-dipropylenharnstoff.

Das so hergestellte Partikel-Komposit, bzw. Repellent-Komposit wird nach der Erfindung beim Textilveredler in dem von ihm verwendeten Host-Komposit (z.B. ein Fluorkarbonharz mit weiteren Ingredienzien) dispergiert und in dieser Form auf das Gewebe appliziert. Die detaillierten Reaktions- und Verfahrensbedingungen werden durch das verwendete Hydrophobierungsmittel und das eingesetzte Vernetzersystem vorgegeben. Durch die Art der Kompositherstellung und aufgrund der dazu verwendeten Ingredienzien ist das Partikel-Komposit mit unterschiedlichsten Host-Matrizen kombinierbar, womit neben der Repellentfunktion zusätzliche Funktionen, sogenannte 'Schicht intrinsische Funktionen' resultieren. Dies sind beispielsweise sehr hohe Ölabweisungen bei leicht reduzierten Hydrophobierungseffekten wie sie für Schutzbekleidungen für Armee und Polizei benötigt werden. Eine andere Kombination stellt die Verwendung des Partikel-Komposits in Kombination mit einer hydrophil dominierten Hostmatrix dar, wobei solche Formulierungen bei Soil-release Ausrüstungen zur Anwendung gelangen. Ähnliche Kombinationen können für antistatische, bakterizide, scheuerfeste und flammhemmende Ausrüstungen formuliert werden, wobei sich immer eine hydrophobe, Schmutz abweisende Grenzschicht auf dem Textilgut ausbildet.

Bedingt durch die emulgatorfreie Formulierung und die Verwendung verschiedener Partikelpopulationen, die im Partikel-Komposit zu einer multimodalen Partikelgrössenverteilung führen und die erwähnten Hyperstrukturen ausbilden, resultieren bei Fluorkarbonharz haltigen Ausrüstungsschichten Beregnungsnoten von 5 (gemäss Bundesmanntest) und Kontaktwinkel mit Heptan von über 100 °. Dies ist überraschend, denn heute bekannte Lotus-Strukturen tragende Ausrüstungen weisen Kontaktwinkel mit Heptan von 70 - 90 ° auf. In Fluorkarbonharz freien Ausrüstungsschichten werden Kontaktwinkel mit Wasser von über 100 ° erzielt.

Weitere Ausführungsformen sind in den abhängigen Ansprüchen angegeben.

### BESCHREIBUNG BEVORZUGTER AUSFÜHRUNGSFORMEN

Beispiel 1 : Hydrophobieren von Polyestergeweben für den Outdoorbereich.

Ein Polyestergewebe mit einem Quadratmetergewicht von 190 g wird durch einen Teilverseifungsprozess (Verseifungsgrad ca. 0.1 %) mit 30 g/l Natronlauge 100 % hydrophiliert. Das so vorbehandelte Gewebe wird mit einer Hydrophobierungsflotte imprägniert, wobei ein 54 %iger Flottenauftrag resultiert.

Im Anschluss an den Flottenauftrag erfolgt die Gewebetrocknung bei 110 - 120 °C, gefolgt vom Kondensationsprozess, der bei 150 - 160 0C während 2 Minuten durchgeführt wird. Die Ingredienzien der Hydrophobierungsflotte sind:

### Partikelkomposit-Formulierung einstufig hergestellt:

| | |
|---|---|
| 100 g/kg | Sident 10 (Degussa, Deutschland) |
| 15 g/kg | Desmophen 800 (Bayer MaterialScience, Deutschland) |
| 70 g/kg | Isopropanol |
| 20 g/kg | Tubicoat Fixierer H24 (Bezema, Schweiz), |
| | intensiv vermischen, anschliessend Zugabe von: |
| 110 g/kg | Softgard M3 (soft Chemicals, Italien) |
| 685 g/kg | Wasser, mahlen in einem Kugelmühlenaggregat während 30 Minuten. |

Die Partikelformulierung zeigt eine monomodale, mittlere Partikelgrössenverteilung von 870 nm.

### Hydrophobierungsflotte:

| | |
|---|---|
| 60 g/l | Partikel-Komposit, hergestellt im einstufigen Coatingprozess |
| 18 g/l | Lyofix CHN (ERBA, Schweiz) |
| 33 g/l | Softgard M3 (soft chemicals, Italien) |
| 7 g/l | MgCl₂ • 6 H₂O |
| 10 g/l | Isopropanol x |
| 1 g/l | Essigsäure |
| 871 g/l | Wasser |

Die nach diesem Ausrüstungsverfahren erzielten, die Hydrophobierung und Schmutzabweisung charakterisierenden Messwerte sind in Tabelle 1 zusammengefasst.

**Tab. 1 Testwerte der Wasser abstossenden und Schmutz abweisenden Ausrüstung**

| Testgrösse | ungewaschen | nach 10 Wäschen bei 60°C |
|---|---|---|
| Spraywerte ⁽¹⁾ | 100 % | 100 % |
| Beregnungsnoten ⁽²⁾ | 5 | 5 |
| Kontaktwinkel mit Heptan ⁽³⁾ | 127° | 113° |
| Abrollwinkel mit Wasser | 21° | 26° |

| | | |
|---|---|---|
| (1) Spraytest; AATCC 22 - 1996 (2) Bundesmann; DIN 53 888 (3) Kontaktwinkel, O. Marte et al., Charakterisierung von "Lotus"-strukturierten Faserund Gewebeoberflächen | | |

### Beispiel 2: Hydrophobieren von Polyester-Baumwollgeweben für Armee-Schutzanzüge.

Ein bedrucktes einseitig mit einer Membranfolie kaschiertes Polyester-Baumwollgewebe (Laminat), mit einem Quadratmetergewicht von 180 g, wird mittels eines Beschichtungsprozesses hydrophobiert. Der Beschichtungsauftrag beträgt 43 % bezogen auf das Gewebetrockengewicht.

Nach der Beschichtung erfolgt die Trocknung des Gewebes bei 110 - 130°C, gefolgt vom Fixierprozess bei 150 - 160 °C während 2 Minuten.

Partikelkomposit-Formulierung, hergestellt nach einem "Zweischicht'-Verfahren, bzw. in einem zweistufigen Coatingprozess:

| | | |
|---|---|---|
| 1) | 100 g/kg | Sipernat D10 (Degussa, Deutschland) |
| | 10 g/kg | Aerosil R972 (Degussa, Deutschland) |
| | 380 g/kg | Isopropanol |
| | 24 g/kg | Desmophen NH 1521 (Bayer MaterialScience, Deutschland) |
| | 20 g/kg | Tubicoat Fixierer H24 (Bezema, Schweiz), |
| | | intensiv mischen, mahlen während 30 Minuten, |
| 2) | | anschliessende Zugabe von (in das Mahlaggregat): |
| | 150 g/kg | Oleophobol 7752 (ERBA, Schweiz) |
| | 336 g/kg | Wasser, |
| | | mahlen während 20 Minuten. |

Die Partikelformulierung zeigt eine bimodale Partikelgrössenverteilung mit mittleren Partikelgrössen von 470 und 820 nm.

### Hydrophobierungsflotte:

| | |
|---|---|
| 80 g/l | Partikel-Komposit hergestellt im zweistufigen Coatingprozess |
| 65 g/l | Oleophobol 7752 (ERBA, Schweiz) |
| 20 g/l | Lyofix CHN (ERBA, Schweiz) |
| 5 g/l | MgCl₂ • 6 H₂O |
| 1.5 g/l | Citronensäure |
| 10 g/l | Isopropanol |
| 1 g/l | Essigsäure |
| 817.5 g/l | Wasser |

Das auf diese Weise beschichtete Gewebe zeigt hervorragende Wasser und Öl abweisende Eigenschaften wie dies die Werte in der Tabelle 2 ausweisen.

**Tab. 2 Testergebnisse des hydro- und oleophob beschichteten Gewebes**

| Testgrösse | ungewaschen | nach 10 Wäschen bei 60°C |
|---|---|---|
| Spraywerte ⁽¹⁾ | 100 % | 100 % |
| Beregnungsnoten ⁽²⁾ | 5 | 5 |
| Kontaktwinkel mit Heptan ⁽³⁾ | > 160 ° | 132 ° |
| Abrollwinkel mit Wasser | 16 ° | 21 ° |

| | | |
|---|---|---|
| (1) Spraytest; AATCC 22 - 1996 (2) Bundesmann; DIN 53 888 (3) Kontaktwinkel, O. Marte et al., Charakterisierung von "Lotus"-strukturierten Faser und Gewebeoberflächen | | |

### Beispiel 3: Hydrophobe und bakterizide Ausrüstung von Baumwollflächengebilden.

Auf ein Baumwollgewirk mit einem Quadratmetergewicht von 130 g wird eine Imprägnierflotte appliziert, die sowohl ein die Gewebeoberfläche hydrophobierendes Partikelkomposit als auch ein bakterizides enthält. Der die Partikel umhüllende Schichtaufbau wird durch einen zweistufigen Coatingprozess erzielt (siehe Beispiel 2). Im Fall des Hydrophobierungskomposits sind es reine Siliziumdioxidpartikel, die mit einem vernetzbaren Polymer (Polyurethan, Dicrylan PGS, ERBA, Schweiz) und einem fettmodifizierten Melaminharz (C16 - C18, Phobotex FTC, ERBA, Schweiz) gecoatet werden, während für die bakterizide Funktion silberbeladene Siliziumdioxidpartikel (elementares oder komplexgebundenes Silber) in analoger Weise schichtaufbauend gecoatet werden. Die gecoateten Primärpartikelkomposite werden unterschiedlichen Mahlbedingungen unterzogen. Dadurch entsteht eine multimodale Partikelgrössenverteilung. Die mittleren Primärpartikelgrössen betragen 7 µm (reine Siliziumdioxidpartikel, vor dem Mahlprozess) und 20 µm (silberbeladene Siliziumdioxidpartikel). Durch unterschiedliche Durchsatzraten der Partikelkomposite auf einer kontinuierlich betriebenen Kugelmühle wurden Verweilzeiten von fünf und acht Minuten erzielt, die in Kombination mit zwei unterschiedlichen Mahlkugelradien (1 mm und 0.6 mm) zu Partikelgrössenverteilungen führten, die zwischen 0.6 - 2 µm liegen.

### Hydrophobierungsflotte:

| | |
|---|---|
| 80 g/l | Siliziumdioxidpartikelkomposit hergestellt in einem ersten |
| | zweistufigen Coatingprozess |
| 75 g/l | Phobotex FTC (ERBA, Schweiz) |
| 20 g/l | Silber/Siliziumdioxidpartikelkomposit hergestellt in einem zweiten |
| | zweistufigen Coatingprozess |
| 15 g/l | Knittex FEL (ERBA, Schweiz) |
| 8 g/l | MgCl₂ • 6H₂O |
| 2 g/l | Weinsäure |
| 10 g/l | Isopropanol |
| 790 g/l | Wasser |

Die Gewebeimprägnierung wurde mit einer Flottenbeladung von 76 % bezogen auf das Gewebetrockengewicht durchgeführt. Der Trocknungs- und Kondensationsprozess erfolgte auf einem Spannrahmen bei 120 bzw. 160 °C.

**Tab. 3 Testergebnisse des hydrophobierten, bakteriziden Gewebes**

| Testgrösse | ungewaschen | nach 10 Wäschen bei 60°C |
|---|---|---|
| Spraywerte ⁽¹⁾ | 100 % | 100 % |
| Beregnungsnoten ⁽²⁾ | 5 | 5 |
| Kontaktwinkel mit Wasser ⁽³⁾ | 126 ° | 118 ° |
| Abrollwinkel mit Wasser | 23 ° | 27 ° |
| spez. bakterizide Aktivität ⁽⁴⁾ | > 4.82 | 3.32 |

| | | |
|---|---|---|
| (1) Spraytest; AATCC 22 - 1996 (2) Bundesmann; DIN 53 888 (3) Kontaktwinkel, O. Marte et al., Charakterisierung von "Lotus"-strukturierten Faserund Gewebeoberflächen (4) Japanese Industrial Standard JIS 1902 (Klebsiella pneumoniae, Strain DSM 789) | | |

Erfindungswesentlich ist, dass auf einer nicht-nanotechnologischen Basis eine lotusstrukturierte Ausrüstungsschicht erzeugt wird, die kostengünstig herstellbar ist und die hervorragende Ausrüstungseffekte zeigt.

## Patentansprüche

1. Verfahren unter Verwendung eines Partikel-Komposits zur Einbringung in eine Ausrüstungsschicht, wobei das Partikel-Komposit Partikel umfasst, die unterschiedliche Grössen von 0.01 - 10 µm aufweisen, wobei die Partikel von mindestens einer Schicht umgeben sind, die eine Coatingmasse enthält und wobei die Partikel durch Vernetzung chemisch fixierbar sind und an der Oberfläche die gleiche Funktion aufweisen wie sie in der Hostmatrix der Ausrüstungsschicht vorliegen
**dadurch gekennzeichnet, dass** das Partikel-Komposit in einem Host-Komposit dispergiert wird und in dieser Form auf Fasern und textilen Flächengebilden appliziert wird, wobei immer eine hydrophobe, Schmutz abweisende Grenzschicht auf dem Textilgut ausgebildet wird.

2. Verfahren nach Anspruch 1, **dadurch gekennzeichnet, dass** die Partikel polymere Kieselsäuren sind, oder dass die Partikel elementare Metalle, vorzugsweise Silber und Kupfer, Metalloxide und deren Gemische, vorzugsweise Al₂O₃ oder Zirkoniumoxide und Mischoxide sind.

3. Verfahren nach einem der Ansprüche 1 - 2, **dadurch gekennzeichnet, dass** die Coatingmasse reaktive Polymere sind, deren Reaktivgruppen waschfest vernetzbar sind, oder dass die Coatingmasse reaktive Silylverbindungen zur Modifikation der Partikeloberflächen enthält, vorzugsweise N-2-Aminoethyl-3-Aminopropyltrimethoxysilan, 3-Aminopropyl-methyltriethoxysilan, Bis(3-Trimethoxysilylpropyl)amin, Triamino funktionelles Propyl-trimethoxysilan, Polyetherpropyltrimethoxysilane, 3-Mercaptopropyltrimethoxysilan oder 3-Glycidyloxypropyltrimethoxysilan, oder dass die Coatingmasse eingelagerte Lösungsmittel oder N₂, CO₂ und NH₃ abspaltende Komponenten aufweist und dass die Coatingmasse während der Trocknung nanoskalige Strukturen ausbildet.

4. Verfahren nach einem der Ansprüche 1 - 3, **dadurch gekennzeichnet, dass** die Coatingmasse Polymer vernetzende Verbindungen enthält, und/oderdas Partikel-Komposit eine monomodale oder eine multimodale Teilchengrössenverteilung aufweist, wobei bevorzugt beim Vorliegen einer multimodalen Teilchengrössenverteilung an der Oberfläche Hyperstrukturen vorliegen.

5. Verfahren nach einem der Ansprüche 1 - 4, **dadurch gekennzeichnet, dass** es Tensid frei ist.

6. Verfahren nach Anspruch 1, **dadurch gekennzeichnet, dass** das Partikel-Komposit mit unterschiedlichsten Host-Matrizen kombiniert wird, wodurch neben der Repellent-funktion zusätzliche Funktionen, sogenannte 'Schicht intrinsische Funktionen' erzeugt werden.

7. Verfahren nach Anspruch 1, **dadurch gekennzeichnet, dass** in einer Fluorkarbonharz enthaltenden Ausrüstungsschicht Kontaktwinkel mit Heptan grösser als 100° oder in einer Fluorkarbonharz freien Ausrüstungsschicht Kontaktwinkel mit Wasser grösser als 100° erzielt werden.

## Claims

1. Process of using a particle composite for incorporation in a finishing layer, wherein the particle composite comprises particles having different sizes of 0.01 - 10 µm, wherein the particles are surrounded by at least one layer containing a coating material, and wherein the particles are chemically fixable by crosslinking and have the same function on the surface as when they are present in the host matrix of the finishing layer,
**characterized in that** the particle composite is dispersed in a host composite and is applied in this form to fibres and textile fabrics, which always results in the formation of a hydrophobic, dirtrepelling boundary layer on the textile material.

2. Process according to Claim 1, **characterized in that** the particles are polymeric silicic acids, or **in that** the particles are elemental metals, preferably silver and copper, metal oxides and mixtures thereof, preferably Al₂O₃ or zirconium oxides and mixed oxides.

3. Process according to either of Claims 1-2, **characterized in that** the coating material comprises reactive polymers whose reactive groups are crosslinkable in a washproof manner, or **in that** the coating material contains reactive silyl compounds for modification of particle surfaces, preferably N-2-aminoethyl-3-aminopropyltrimethoxysilane, 3-amino-propylmethyltriethoxysilane, bis(3-trimethoxysilylpropyl)amine, triamino-functional propyltrimethoxysilane, polyether propyltrimethoxysilanes, 3-mercaptopropyltrimethoxysilane or 3-glycidyloxypropyl-trimethoxysilane, or **in that** the coating material includes embedded solvents or N₂-, CO₂- and NH₃-detaching components, and **in that** the coating material dries to form nanoscale structures.

4. Process according to any of Claims 1-3, **characterized in that** the coating material contains polymer-crosslinking compounds, and/or the particle composite has a monomodal or a multimodal corpuscle size distribution, and in the case of a multimodal corpuscle size distribution there are preferably hyperstructures present on the surface.

5. Process according to any of Claims 1-4, **characterized in that** it is surfactant free.

6. Process according to Claim 1, **characterized in that** the particle composite is combined with a very wide variety of host matrices to create so-called "layer-intrinsic functions" as additional functions alongside the repellent function.

7. Process according to Claim 1, **characterized in that** contact angles greater than 100° are achieved with regard to heptane in a fluorocarbon resin-containing finishing layer or with regard to water in a fluorocarbon resin-free finishing layer.

## Revendications

1. Procédé utilisant un composite particulaire destiné à être inséré dans une couche de finition, le composite particulaire comprenant des particules qui présentent différentes tailles allant de 0,01 à 10 µm, les particules étant entourées par au moins une couche qui contient un matériau de revêtement et les particules étant fixables chimiquement par réticulation et présentant sur la surface la même fonction que celle présente dans la matrice hôte de la couche de finition, **caractérisé en ce que** le composite particulaire est dispersé dans un composite hôte et est appliqué sous cette forme sur des fibres et des structures textiles plates, une couche limite hydrophobe repoussant la saleté étant toujours formée sur l'article textile.

2. Procédé selon la revendication 1, **caractérisé en ce que** les particules sont des silices polymères ou **en ce que** les particules sont des métaux élémentaires, de préférence l'argent et le cuivre, des oxydes métalliques et leurs mélanges, de préférence Al₂O₃ ou des oxydes de zirconium et des oxydes mixtes.

3. Procédé selon l'une quelconque des revendications 1 à 2, **caractérisé en ce que** les matériaux de revêtement sont des polymères réactifs dont les groupes réactifs sont réticulables d'une manière résistante au lavage ou **en ce que** le matériau de revêtement contient des composés de silyle réactifs pour la modification des surfaces des particules, de préférence le N-2-aminoéthyl-3-aminopropyltriméthoxysilane, le 3-aminopropyl-méthyltriéthoxysilane, la bis(3-triméthoxysilylpropyl)amine, le propyl-triméthoxysilane triamino-fonctionnel, les polyéther-propyltriméthoxysilanes, le 3-mercaptopropyltriméthoxysilane ou le 3-glycidyloxypropyltriméthoxysilane, ou **en ce que** le matériau de revêtement comprend des solvants incorporés ou des composants clivant N₂, CO₂ et NH₃, et **en ce que** le matériau de revêtement forme pendant le séchage des structures nanométriques.

4. Procédé selon l'une quelconque des revendications 1 à 3, **caractérisé en ce que** le matériau de revêtement contient des composés réticulant les polymères et/ou le composite particulaire présente une distribution des tailles de particules monomodale ou multimodale, des hyper-structures étant de préférence présentes à la surface lors de la présence d'une distribution des tailles de particules multimodale.

5. Procédé selon l'une quelconque des revendications 1 à 4, **caractérisé en ce qu'**il est exempt de tensioactifs.

6. Procédé selon la revendication 1, **caractérisé en ce que** le composite particulaire est combiné avec différentes matrices hôtes, des fonctions supplémentaires étant ainsi générées en plus de la fonction de répulsion, dites « fonctions intrinsèques à la couche ».

7. Procédé selon la revendication 1, **caractérisé en ce qu'**un angle de contact avec l'heptane supérieur à 100° est obtenu avec une couche de finition contenant une résine fluorocarbonée et un angle de contact avec l'eau supérieur à 100° est obtenu avec une couche de protection sans résine fluorocarbonée.
